(19) Europäisches Patentamt

European Patent Office

Office européen des brevets

(11) Publication number: 0 548 130 B1

# EUROPEAN PATENT SPECIFICATION

(45) Date of publication of patent specification: 28.12.94　(51) Int. Cl.⁵: **C09C 1/48**, C10B 53/00

(21) Application number: 91915755.2

(22) Date of filing: 11.09.91

(86) International application number:
PCT/BE91/00063

(87) International publication number:
WO 92/04414 (19.03.92 92/07)

(54) PROCESS FOR MANUFACTURING CARBON BLACK AND THUS MANUFACTURED CARBON BLACK.

(30) Priority: 12.09.90 BE 9000873

(43) Date of publication of application:
30.06.93 Bulletin 93/26

(45) Publication of the grant of the patent:
28.12.94 Bulletin 94/52

(84) Designated Contracting States:
AT BE CH DE DK ES FR GB GR IT LI LU NL SE

(56) References cited:
FR-A- 2 484 294
US-A- 3 843 457
US-A- 4 219 415

(73) Proprietor: VAN DER HEIJDEN, Iris de Pace Maria Paloma
Ulicotenseweg 47
B-2328 Hoogstraten (BE)

(72) Inventor: SCHIPPERS, Wilhelmus, Johannes, Henricus
Ulicotenseweg 47
B-2328 Hoogstraten (BE)

(74) Representative: Debrabandere, René
Bureau De Rycker nv
Arenbergstraat 13
B-2000 Antwerpen (BE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a method for manufacturing carbon black.

Carbon black is often used as a filler or a reinforcement agent which is added to polymers, especially to rubber and elastomers. Carbon black is also suitable as a pigment for printing ink, coatings etc.

Prior art methods for manufacturing carbon black start from hydrocarbons which are cracked and/or incompletely calcinated at high temperatures. Such methods are for instance described in the Dutch patent applications No. 8004048 and 8801112. As is started from hydrocarbons, at the used temperatures which may exceed 1000 degrees Celsius, products which are hazardous to the environment may possibly be created, such as PCB's and nitrosaminebearers. These products are thus found in the obtained carbon black. These products are mainly formed when starting from chlorinated hydrocarbons.

The methods described in the above patent application principally aim at the obtaining of carbon black with more favourable characteristics, such as a higher specific surface of the carbon black particles or a stronger structure whereby the carbon black is more appropriate for certain applications such as, for instance, the vulcanising of rubber.

The present invention aims at a new method to manufacture carbon black whereby, in an economical and environmentally favourable way, a new kind of carbon black is obtained, presenting excellent and environmentally favourable characteristics, which is especially suitable as an additif to elastomers, printing ink and coatings and whereby the presence in the carbon black of hazardous products can easily be avoided.

Therefore, vegetal material and/or animal waste material and/or algae is or are first compacted to the desired density and dry substance content and then subjected to a biochemical pre-processing comprising an irradiation by electromagnetic radiation, during which care is taken that the temperature of the material remains under 70 degrees Celsius, so that a strongly increased activity of thermophilic bacteria and an acceleration of the gel formation of the binding protein plasm between the cells occurs and a break-up of the organic cells takes place, after which the obtained material is subjected to a pyrolysis comprising three phases: a first phase wherein principally moisture, inclusive bound moisture is released, a second phase at higher temperatures wherein principally evaporatable hydrocarbons are released by evaporation and a third phase, at still higher temperatures, wherein the carbonizing of the remaining cell nuclei to carbon black is performed.

In a remarkable embodiment of the invention a pyrolysis is performed without oxidation agents.

Such oxidation agents are for instance, air, which means that the pyrolysis is performed in an anaerobic way.

Preferably the material is irradiated with magnetic wave pulses having a frequency between 800 and 1100 MHz.

The invention also relates to the carbon black manufactured according to the method according to one of the above-mentioned embodiments.

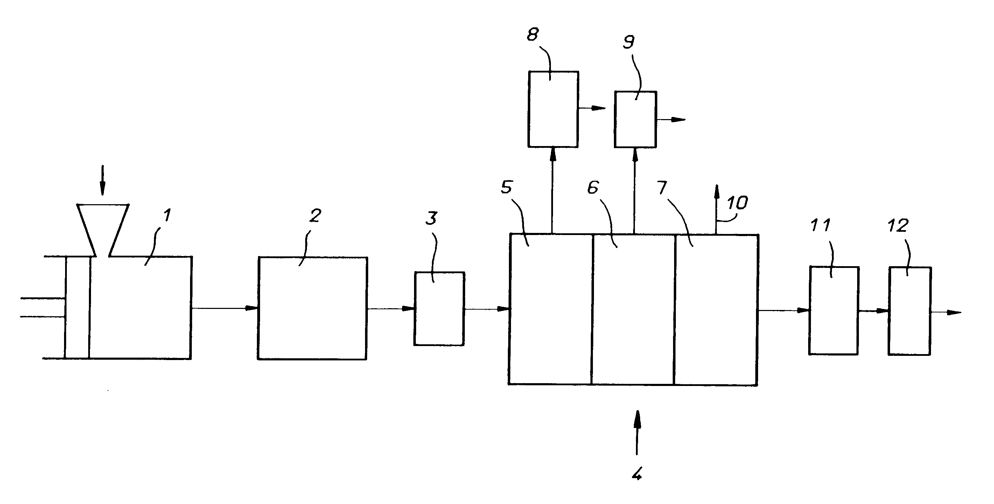

Other particularities and advantages of the invention will appear from the description hereinafter of a method for manufacturing carbon black and the thus manufactured carbon black, according to the invention. This description is only given as an example and does not limit the invention. The reference numbers concern the attached drawing, which represents a block diagram of the procedure according to the invention.

To manufacture carbon black having excellent characteristics one starts from organic material in a relative solid form, having a dry dust content higher than 50%. Possibly a quantity of mineral material may be added to this organic material, but the quantity of mineral material has to be smaller than the quantity of organic material.

As organic material are especially suitable animal waste products such as chicken manure and/or vegetable material and algae, preferably so-called "blue green algae (cyanophytes)". Naturally, the quality and the characteristic of the obtained carbon black will be influenced by the composition of the starting material.

This starting material is consequently subjected to a biochemical pre-processing and a pyrolysis.

The biochemical pre-processing comprises a compacting in a hydraulic press 1 and an irradiation with electromagnetic waves in a magnetron 2.

The compressing can be effected in several steps and by using smaller pistons which are mounted in the main piston and which can penetrate the mass compacted by the main piston, a homogenization of the material may be obtained. The compacting is performed using a pressure higher than 24,500 kPa and preferably higher than 27,440 kPa, but not higher than 29,400 kPa. A homogeneous mass is obtained, having a density equal to or higher than 280 kg per square centimeter power of resistance, and whereof the temperature is raised to 30-35 degrees Celsius and the moisture content decreased.

The compacted homogeneous material is then irradiated in the magnetron 2 during at least 20 minutes and preferably about 30 minutes with electromagnetic pulses of, for instance 5 s with a frequency between 800 and 1100 MHz, and preferebly between 900 and 920 MHz. A magnetron having a power between 5 and 12 kW and preferebly between 6,8 to 7,6 kW is used. Care is taken that the irradiation waves are evenly distributed upon the material. Therefore wave conductors may be used. Consequently the material is irradiated on top, underneath and on each side. The irradiation is performed in a poor air environment, and thus in an almost completely anaerobic way.

The object of the irradiation is to activate specific anaerobic thermophilic bacteria such as for instance stearo-type bacteria which naturally present already a Brown movement. The frequency is thus selected that not so much friction between the molecules appears and consequently heating, as the activation of the Brown movement of bacteria and cell organisms. Therefore extreme care has to be taken to prevent the temperature of the material, because of friction between the molecules, to rise higher than 70 degrees Celcius. As a result of the activity of the anaerobic thermophilic bacteria, the temperature will also rise. On the other hand, the temperature may not remain at about 30 to 40 degrees Celsius, whereas, due to the activity of Psychro and Mesophyle bacteria, methane gas could be formed.

The magnetron 2 is a closed tunnel. The material is moved through this tunnel by means of a conveyor belt, preferebly made from Teflon (registered trademark) or Keplar (registered trademark).

By the processing in the magnetron a biological decomposition process of the organic material takes place and a strongly increased activity of thermophilic bacteria and an acceleration of the gel formation of the binding protein plasm occurs, which entails a break-up of the organic cells. The material is decomposed by an increase of enzymes and plasma from the binding fibre structure and from the break-up of the cells and cell nuclei.

The irradiated and already partially decomposed material is crumbled in a device 3, whereupon the crumbled material is subjected, still without supplying oxidation agents and thus, among other things, without addition of air, and under an atmospheric pressure, in the reactor 4 to a pyrolysis comprising three phases. During the crumbling the released moisture is eliminated.

During the first phase, in the first reactor zone 5, the incoming material having a temperature of about 70 degrees Celsius is heated to a temperature between 200 and 250 degrees Celsius whereby principally all the moisture, inclusive molecular bound moisture, is released. The released moisture is conveyed out of the reactor zone 5 and condenses in the condensor 8.

The remaining material is heated in a second reactor zone 6 up to a temperature of approximately 480 degrees Celsius. Hereby most evaporatable hydrocarbons are released. Hydrocarbons which evaporate in this second zone are among other things unsaturated hydrocarbons such as ethylene and acethylene, alkenes such as ethene, propene and butene, aromatic hydrocarbons such as benzene, toluene and xylene and certain saturated hydrocarbons such as kerosines, naftalenes, ethylene tars. These released hydrocarbons are conveyed from the reactor zone 6 without their being in contact with the outflowing water and principally the gases which are released in the next reactor zone 7. The conveyed hydrocarbons are condensed in a condensor 9. The condensed hydrocarbons can possibly be used as fuel for the heating of the reactor zones.

Finally, in the third reactor zone 7, the material is heated to a temperature of 520 to 580 degrees Celsius, preferably to 538 degrees Celsius and this material is kept at this temperature for 20 to 30 minutes and preferably 22 to 25 minutes. During this third phase a carbonization of the material occurs, these are the remaining cell nuclei, whereby carbon black is formed.

The flowing through of the material from one reactor zone to the other is effected by means of mixture control screws and gas locks (so-called "air locks"). The gasses released during the last mentioned phase and among other things during the carbonizing process, are conveyed through 10. The obtained solid pulverised carbon black which is conveyed from the last reactor zone 7, still without supplying an oxidizing agent, is quenched or cooled. Possible unwanted by-products which might be present in the carbon black are separated. In the apparatus 12 the carbon black is possibly subjected to further post-processing such as sifting, grinding, degritting, ilutriating (separation) or the formation of grains or platelets or pellets.

A new kind of carbon black is obtained with excellent characteristics which contain no products which are hazardous to the environment such as PCB's and nitrosaminebearers. This kind of carbon black presents the following characteristics:

Absorption surface of iodine

The absorption surface of iodine of the carbon black is determined as follows: a carbon black sample is placed in a porcelain crucible, provided with a loose lid to enable the gasses to escape, and calcinated at a temperature of 927 degrees Celsius during 7 min. and afterwards cooled in an exsiccator. The top layer of the calcinated carbon black is removed to a depth of approximately 0,635 cm. A suitable sample is weighed from the remaining carbon black in the crucible. A sample of 0,1 g is suitable for carbon black with an expected surface of 380 $m^2/g$. The sample is placed in a flask and fourty ml of 0,0473 N iodine solution is added. The flask is closed en shaken during 10 minutes at a speed of 120-260 up and down movements per minute. The obtained solution is immediately centrifuged at 1200-2000 rotations per minute until the solution becomes clear, this means mostly 1 to 3 minutes. A sample of 25 ml iodine solution, to which a few drops of a 1% starch solution as terminal indicator are added, is titrated with a 0,0394 N sodiumthiosulphate solution until the blue colour turns to colourless. As blanco sample 40 ml of the 0,0473 N iodine solution is shaken, centrifugated and titrated as described above. The iodine surface absorption S.A., is calculated as follows: S.A. = (10 B - 10 T - 4,57)/1,3375, wherein B represents the titration number of the sample to be measured.

The carbon black manufactured according to the method described above, has an iodine surface higher than 380 $m^2/g$.

Dibutylphtalate absorption number (DBF)

This is calculated according to the ASTM-testing method D2414-76. Palettized carbon black obtained according to the above method has a DBF value higher than 200 ml/100 g.

pH

The pH of a 5 g solution of the obtained palettized carbon black in 50 ml distilled water, boiled for 10 minutes, is measured. The pH is less than 5.

Iodine addition number

The iodine addition number of the carbon black according to ISO 1304 is 380 g/kg.

Specific weight

The specific weight of the obtained carbon black after drying for 24 hours at 105 degrees Celsius in a pyrolitic oven is 0,8 $g/cm^3$.

Specific surface

The specific surface measured with $CO_2$ adsorption at 273 K (compression modules) lies between 35 and 200 $m^2/g$, and measured with $N_2$ at 77 K between 10 and 30 $m^2/g$.

Porosity

Mercury porosimetry shows that also larger pores are present with rp = 4-2000nm with a maximum of 4000 nm. These pores have a volume of Vp = 0,3 - 0,7 $cm^3/g$.

Size of the particles

The diameter of the particles varies from 4 to 200 nanometer. The carbon black has a wide range of particle sizes. The d50 amounts to 51 micrometer.

BET surface

After being kept at 300 degrees Celsius during 16 hours, the BET surface measured with $N_2$ adsorption at -196 degrees Celsius has a value of at least 34 $m^2/g$.

Mixing behaviour

The obtained carbon black is mixed with among other things ethylene-propylene-rubber (EPDM), after being dried in a pyrolitic oven at 105 degrees Celsius for 24 hours, in a proportion of 70 parts of carbon black per 100 parts of polymer, in a Banbury-mixing device GK2 of Werner & Pfleiderer.

Mixing conditions:    loadfactor 76%
    revolutions rotors 46-48 rpm wall temperature: 40 degrees Celsius

Mixing cycle:    0-30 s. polymer
    after 30 s. carbon black discharge after 3 min.

| Constitution of the mixture | |
|---|---|
| Keltan 512 EDPN | 100 weight parts |
| ZnO | 5 |
| Stearinic acid | 1 |
| Sunpar 2280 | 5 |
| Carbon black | 70 |
| T M T D S (50%) | 1 |
| M B T (80%) | 0,63 |
| Z D E C (80%) | 2,5 |
| S | 1,5 |
| | 186,63 |

As a reference, the same mixture is manufactured but whereby the carbon black obtained according to the invention is replaced by a commercial carbon black, namely Cancarb Thermax carbon black. Both carbon blacks show a normal mixing behaviour. After the mixing, the mixtures are conveyed through a two roller grinding device and formed into sheets for further testing.

| Characterizing of the mixture | | carbon black (ref.) | carbon black (invention) |
|---|---|---|---|
| ML (1 + 4) | 100 C. | 62,2 | 79,1 |
| Rheometer | 160 C. ML (Nm) | 1,56 | 2,26 |
| | Ts2 (min) | 1,35 | 1,20 |
| | T'c90 (min) | 15,56 | 10,78 |
| | MH (Nm) | 11,35 | 11,36 |
| Vulcanisate 12'/180 C. | | | |
| S 100 (N/mm$^2$) | | 2,1 | 1,9 |
| S 200 (N/mm$^2$) | | 4,1 | 3,5 |
| S 300 (N/mm$^2$) | | 5,9 | 5 |
| Tensile stress (N/mm$^2$) | | 9,2 | 8,5 |
| Elastic strain at fracture (%) | | 415 | 367 |
| Hardness (Shore A) | | 68 | 66 |
| Compr. set 22 h/70C. | | 17 | 21 |
| Compr. set 72 h/23C. | | 10 | 13 |

Conclusions

From the preceding, it appears that the new carbon black obtained by the method described above is very satisfying for applications in rubbers and elastomers. The physical characteristics are easily influenced by modifying the conditions of the method within the determined limits and by the choice of the starting material. By this method carbon blacks can be manufactured which can be classified according to the ASTM code from N110 to N990. Preferably carbon blacks are manufactured with a classification comparable to "medium thermal". When applying the carbon black according to the invention in natural rubber and nitrile elastomer, the physical characteristics of the carbon black are comparable to these obtained with carbon black which is known on the market under the name THERMAX 991.

The invention is by no means restricted to the above described method and carbon black, and within the framework of the invention many modifications may be made to the described embodiment.

## Claims

1. Method for manufacturing carbon black, characterized in that vegetal material and/or animal waste material and/or algae is or are first compacted to the desired density and dry substance content and then subjected to a biochemical pre-processing comprising an irradiation by electromagnetic radiation, during which care is taken that the temperature of the material remains under 70 degrees Celsius, so that a strongly increased activity of thermophilic bacteria and an acceleration of the gel formation of the binding protein plasm between the cells occurs and a break-up of the organic cells takes place, after which the obtained material is subjected to a pyrolysis comprising three phases: a first phase wherein principally moisture, inclusive bound moisture is released, a second phase at higher temperatures wherein principally evaporatable hydrocarbons are released by evaporation and a third phase, at still higher temperatures, wherein the carbonizing of the remaining cell nuclei to carbon black is performed.

2. Method according to the previous claim, characterized in that the first phase of the pyrolysis is performed at a temperature up to maximum 250 degrees Celsius.

3. Method according to one of claims 1 and 2, characterized in that the second phase of the pyrolysis is performed at a temperature between 250 and 480 degrees Celsius.

4. Method according to either one of claims 1 to 3, characterized in that the third phase of the pyrolysis is performed at a temperature between 480 and 580 degrees Celsius.

5. Method according to either one of claims 1 to 4, characterized in that the third phase with the carbonization is performed during 20 to 30 minutes.

6. Method according to either one of claims 1 to 5, characterized in that the pyrolysis is performed without oxidizing agents.

7. Method according to claim 6, characterized in that the electromagnetic irradiation is performed with wave pulses having a frequency between 800 and 1100 MHz.

8. Method according to claim 7, characterized in that the electromagnetic irradiation is performed with wave pulses having a frequency between 900 and 1000 MHz.

9. Method according to either one of claims 1 to 8, characterized in that the compacting is performed by compression with a pressure of 200 to 300 kPa.

10. Method according to either one of claims 1 to 9, characterized in that the biochemical pre-processing is performed without supplying oxidating agents and that, between the pre-processing and the pyrolysis, no oxidating agents are permitted.

11. Method according to either one of claims 1 to 10, characterized in that one starts from an organic material having a dry dust content higher than 50%.

12. Carbon black manufactured according to the method according to one of the previous claims.

13. Carbon black according to claim 12, characterized in that it has a specific surface, measured by $CO_2$ absorption, between 35 and 250 $m^2/g$, an iodide surface of at least 380 $m^2/g$, a pH lower than 5, a DBF-value higher than 200 ml per 100 g and a iodine addition number higher than 380 g per kg.

**Patentansprüche**

1. Verfahren zur Herstellung von Ruß, dadurch gekennzeichnet, daß pflanzliches Material und/oder tierisches Abfallmaterial und/oder Algen zunächst bis auf die gewünschte Dichte und Trockensubstanzgehalt verdichtet wird oder werden und dann einer biochemischen Vorbehandlung unterworfen werden, welche eine Bestrahlung durch elektromagnetische Strahlung umfaßt, während derer dafür gesorgt wird, daß die Temperatur des Materials unter 70 Grad Celsius bleibt, so daß eine stark erhöhte Aktivität thermophiler Bakterien und eine Beschleunigung der Gelbildung des verbindenden Proteinplasmas zwischen den Zellen auftritt und ein Aufbrechen der organischen Zellen stattfindet, wonach das erhaltene Material einer Pyrolyse unterworfen wird, welche drei Phasen umfaßt: eine erste Phase, worin hauptsächlich Feuchtigkeit, einschließlich gebundener Feuchtigkeit, freigesetzt wird, eine zweite Phase bei höheren Temperaturen, worin hauptsächlich verdunstbare Kohlenwasserstoffe durch Verdunstung freigesetzt werden, und eine dritte Phase, bei noch höheren Temperaturen, worin die Karbonisation der verbleibenden Zellnuklei zu Ruß durchgeführt wird.

2. Verfahren gemäß dem vorgenannten Anspruch, dadurch gekennzeichnet, daß die erste Phase der Pyrolyse bei einer Temperatur bis zu maximal 250 Grad Celsius durchgeführt wird.

3. Verfahren gemäß einem der Ansprüche 1 und 2, dadurch gekennzeichnet, daß die zweite Phase der Pyrolyse bei einer Temperatur zwischen 250 und 480 Grad Celsius durchgeführt wird.

4. Verfahren gemäß einem der Ansprüche 1 bis 3, dadurch gekennzeichnet, daß die dritte Phase der Pyrolyse bei einer Temperatur zwischen 480 und 580 Grad Celsius durchgeführt wird.

5. Verfahren gemäß einem der Ansprüche 1 bis 4, dadurch gekennzeichnet, daß die dritte Phase mit der Karbonisation während 20 bis 30 Minuten durchgeführt wird.

6. Verfahren gemäß einem der Ansprüche 1 bis 5, dadurch gekennzeichnet, daß die Pyrolyse ohne Oxidationsmittel durchgeführt wird.

7. Verfahren gemäß Anspruch 6, dadurch gekennzeichnet, daß die elektromagnetische Bestrahlung mit Wellenimpulsen mit einer Frequenz zwischen 800 und 1100 MHz durchgeführt wird.

8. Verfahren gemäß Anspruch 7, dadurch gekennzeichnet, daß die elektromagnetische Bestrahlung mit Wellenimpulsen mit einer Frequenz zwischen 900 und 1000 MHz durchgeführt wird.

9. Verfahren gemäß einem der Ansprüche 1 bis 8, dadurch gekennzeichnet, daß die Verdichtung durch Kompression mit einem Druck von 200 bis 300 kPa durchgeführt wird.

10. Verfahren gemäß einem der Ansprüche 1 bis 9, dadurch gekennzeichnet, daß die biochemische Vorbehandlung ohne Zufuhr von Oxidationsmitteln durchgeführt wird und daß, zwischen der Vorbehandlung und der Pyrolyse, keine Oxidationsmittel gestattet sind.

11. Verfahren gemäß einem der Ansprüche 1 bis 10, dadurch gekennzeichnet, daß von organischem Material ausgegangen wird, das einen Trockenstoffgehalt von mehr als 50 % aufweist.

12. Ruß, hergestellt gemäß dem Verfahren gemäß einem der vorgenannten Ansprüche.

13. Ruß gemäß Anspruch 12, dadurch gekennzeichnet, daß er eine spezifische Oberfläche aufweist, gemessen durch die $CO_2$-Absorption, zwischen 35 und 250 $m^2/g$, eine Jodoberfläche von zumindest 380 $m^2/g$, einen PH-Wert von weniger als 5, einen DBF-Wert von mehr als 200 ml pro 100 g und eine Jodadditionsziffer von mehr als 380 g pro kg.

**Revendications**

1. Procédé pour fabriquer du noir de carbone, caractérisé en ce qu'on soumet d'abord à un compactage de la matière végétale et/ou des matières de déchets animales et/ou des algues pour obtenir la densité désirée et la teneur désirée en substance sèche, et ensuite on soumet à un prétraitement biochimique

EP 0 548 130 B1

comprenant une irradiation par rayonnement électromagnétique pendant laquelle on veille à ce que la température de la matière reste en dessous de 70 degrés Celsius de telle sorte qu'apparaisse une forte augmentation de l'activité des bactéries thermophiles et une accélération de la formation de gel du plasma protéinique de liaison entre les cellules et que se produise une rupture des cellules organiques, après quoi on soumet la matière obtenue à une pyrolyse comprenant trois phases: une première phase dans laquelle on élimine principalement l'humidité y compris l'humidité liée, une deuxième phase à température plus élevée dans laquelle on élimine par évaporation principalement des hydrocarbures aptes à être évaporés, et une troisième phase à une température encore plus élevée, dans laquelle on effectue la carbonisation des germes cellulaires restant pour obtenir du noir de carbone.

2.  Procédé selon la revendication précédente, caractérisé en ce qu'on effectue la première phase de la pyrolyse à une température allant au maximum jusqu'à 250 degrés Celsius.

3.  Procédé selon l'une quelconque des revendications 1 et 2, caractérisé en ce qu'on effectue la deuxième phase de la pyrolyse à une température entre 250 et 480 degrés Celsius.

4.  Procédé selon une quelconque des revendications 1 à 3, caractérisé en ce qu'on effectue la troisième phase de la pyrolyse à une température entre 480 et 580 degrés Celsius.

5.  Procédé selon l'une quelconque des revendications 1 à 4, caractérisé en ce qu'on effectue la troisième phase, celle de la carbonisation, pendant 20 à 30 minutes.

6.  Procédé selon l'une quelconque des revendications 1 à 5, caractérisé en ce qu'on effectue la pyrolyse sans agents d'oxydation.

7.  Procédé selon la revendication 6, caractérisée en ce qu'on effectue l'irradiation électromagnétique avec des impulsions d'ondes ayant une fréquence entre 800 et 1600 MHz.

8.  Procédé selon la revendication 7, caractérisé en ce qu'on effectue l'irradiation électromagnétique avec des impulsions d'ondes ayant une fréquence entre 900 et 1000 MHz.

9.  Procédé selon l'une quelconque des revendications 1 à 8, caractérisé en ce qu'on effectue le compactage par compression sous une pression de 200 à 300 kPa.

10. Procédé selon l'une quelconque des revendications 1 à 9, caractérisé en ce qu'on effectue le prétraitement biochimique sans appliquer des agents d'oxydation et en ce que, entre le prétraitement et la pyrolyse, aucun agent d'oxydation n'est toléré.

11. Procédé selon l'une quelconque des revendications 1 à 10, caractérisé en ce qu'on commence avec une matière organique ayant une teneur en poussières sèches supérieure à 50%.

12. Noir de carbone fabriqué conformément au procédé selon l'une quelconque des revendications précédentes.

13. Noir de carbone selon la revendication 12, caractérisé en ce qu'il possède une surface spécifique mesurée par absorption de $CO_2$ entre 35 et 250 $m^2/g$, une surface d'iodure d'au moins 380 $m^2/g$, un pH inférieur à 5, une valeur DBF supérieure à 200 ml par 100 g et un indice d'absorption d'iode supérieur à 380 g par kg.

8

EP 0 548 130 B1